# EUROPEAN PATENT SPECIFICATION

(11) **EP 2 298 948 B1**
(45) Date of publication and mention of the grant of the patent: **01.05.2019**
(21) Application number: 09754654.3
(22) Date of filing: 25.05.2009
(51) Int. Cl.: B44C 5/00, B44F 1/08, C04B 35/58, C22C 1/05, C22C 29/16

(54) **CERAMIC FOR DECORATIVE PART AND DECORATIVE PART COMPRISING THE SAME**
KERAMIK FÜR EIN DEKORATIVES ELEMENT UND DEKORATIVES ELEMENT DASSELBE UMFASSEND
CÉRAMIQUE POUR ÉLÉMENT DÉCORATIF ET ÉLÉMENT DÉCORATIF LA COMPRENANT

(30) Priority: 28.05.2008 JP 2008139330
(43) Date of publication of application: 23.03.2011
(73) Proprietor: Kyocera Corporation, Kyoto-shi Kyoto 612-8501 (JP)
(72) Inventor: MURAKAWA, Shunichi, Kirishima-shi Kagoshima 899-4396 (JP); OHTA, Mizuho, Kirishima-shi Kagoshima 899-4396 (JP)
(74) Representative: Viering, Jentschura & Partner mbB Patent- und Rechtsanwälte
(86) International application number: PCT/JP2009/059531
(87) International publication number: WO 2009/145146

(56) References cited:
- EP-A1- 1 767 661
- EP-A1- 2 226 404
- WO-A1-2009/069549
- JP-A- 56 009 342
- JP-A- 56 009 343
- JP-A- 60 029 443
- JP-A- 2003 013 154
- JP-A- 2003 013 154
- US-A- 4 589 917

## Description

### Technical Field

The present invention relates to ceramics for decorative component that produces pinkish golden color having beautiful color tone, and a decorative component using the same.

### Background Art

Conventionally, decorative components of watch and decorative components of accessory that show golden color have been made from gold or an alloy thereof, or by plating various metals. However, gold, alloys thereof and plated metallic materials are all low in hardness, and have such a problem that a contact with a hard object results in scratch or dent on the surface or deformation thereof. With diversification of taste, variation of golden color has been required and various ceramics for decorative components have been proposed to solve this problem and to respond to demands, recently.

Patent Document 1 discloses, for example, a sintered alloy (ceramics for decorative component) which contains 45 to 75% by mass of titanium nitride and 7.5 to 25% by mass of titanium carbide as a hard phase, 1 to 10% by mass of chromium in terms of equivalent carbide, 0.1 to 5% by mass of molybdenum in terms of equivalent carbide and 5 to 20% by mass of nickel as a binder phase, and 5 to 20% by mass of nickel in terms of equivalent chromium, and also has a lightness index L* in a range from 65 to 69, a* in a range from 4 to 9 and b* in a range from 5 to 16 in the L*a*b* color space as measured with a colorimeter.

Patent Document 2 discloses a sintered alloy for decoration (ceramics for decorative component) consisting of 70 to 98% by mass of a hard phase represented by formula (A), 2 to 30% by mass of a binder phase of at least one kind selected from among Fe, Ni, Co, Cr, Mo and W, and inevitable impurities:

(Tiₐ, M_{b}) (N_{w}, Cₓ, O_{y}) Z (A)

where M represents at least one kind selected from among Zr, Hf, V, Nb, Ta and Cr;
a + b = 1, 1 ≥ a ≥ 0.4, 0.6 ≥ b ≥ 0;
W + X + Y = 1, X + Y > 0, 1 > W ≥ 0.4
0.19 ≥ X ≥ 0, 0.6 ≥ Y ≥ 0, 0.93 ≥ Z ≥ 0.6.

Patent Document 3 discloses a sintered alloy for decoration (ceramics for decorative component) consisting of 2 to 30% by mass of a binder phase of at least one kind selected from among Fe, Ni, Co, Cr, Mo and W, 0.1 to 10% by mass of a reinforcement phase constituted from a metal of at least one kind selected from among P, Al, B, Si, Mn, Ti, Zr, Hf, V, Nb and Ta, an alloy or an oxide of Al, Y, Zr, Mg, Ni and Si, a nitride of Al, Si and B, a carbide of Mo, or a compound of at least one kind of a mutual solid solution thereof, remainder of a hard phase represented by formula (A) below and inevitable impurities:

(Tiₐ, M_{b}) (N_{w}, Cₓ, O_{y}) Z (A)

where M represents at least one kind selected from among Zr, Hf, V, Nb, Ta and Cr;
a + b = 1, 1 ≥ a ≥ 0.4, 0.6 ≥ b ≥ 0;
W + X + Y = 1, X + Y > 0, 1 > W ≥ 0.4
0.5 ≥ X ≥ 0, 0.6 ≥ Y ≥ 0.06, 0.93 ≥ Z ≥ 0.6.

Patent Documents 2 and 3 disclose a sintered alloy for decoration (ceramics for decorative component) which maintains golden color tone by means of the hard phase constituted mainly from TiN_{z} (0.6 ≤ Z ≤ 0.95). These documents describe that the color tone shifts from golden color tone to pale golden color as the value of Z becomes lower than the value of the stoichiometrical composition, and that the color tone can be easily controlled in a range from deep and pale golden color to vivid golden color, by adding TiO, ZrN, HfN, VN, NbN, TaN, CrN, Cr₂N, TaC and NbC that shows golden color to the sintered alloy.

Patent Document 4 discloses ceramics for decorative component, which contains titanium nitride as the main component, nickel as an auxiliary component and at least one kind selected from among vanadium nitride, niobium nitride, tantalum nitride, molybdenum carbide, niobium carbide, tungsten carbide and tantalum carbide as an additive component, and also has an arithmetic mean height Ra of at least not more than 0.03 µm of the decorative surface, a lightness index L* in a range from 72 to 84 and chromaticness indices a* and b* in ranges from 4 to 9 and from 28 to 36, respectively, in the L*a*b* color space of CIE1976 of the above decorative surface.

### Prior Art Documents

### Patent Documents

Patent Document 1: JP-A-2003-13154
Patent Document 2: JP-A-58-204149
Patent Document 3: JP-A-58-204150
Patent Document 4: Description of EP-A-1 767 661

### Disclosure of the Invention

### Problems to be Solved by the Invention

However, although the ceramics for decorative component described in Patent Documents 1 to 4 has excellent mechanical properties such as hardness and corrosion resistance without a possibility of the surface coat to peel off because they are sintered bodies, the ceramics for decorative component of Patent Document 1 has color tone that is somewhere between a combination of silver and violet and a combination of silver and pink, the ceramics for decorative component of Patent Documents 2 and 3 have color tone in a range from deep and pale golden color to vivid golden color, and the ceramics for decorative component of Patent Document 4 has golden color tone. These ceramics for decorative components did not have pinkish golden color that is recently very popular for the decorative component.

The present invention has been made so as to solve the problems described above and an object thereof is to provide ceramics for decorative component, which has pinkish golden color tone and provides high-grade impression, aesthetic satisfaction and mind soothing effect, and has high mechanical properties such as hardness and toughness, and a decorative component using the same.

### Means for Solving the Problem

The present invention provides ceramics for decorative component according to claim 1. Further embodiments of the ceramics and decorative components comprising the ceramics are described in the dependent claims.

### Effects of the Invention

According to the ceramics for decorative component of the present invention, composed of titanium nitride-based sintered body, wherein the titanium nitride-based sintered body contains nickel, niobium, chromium and carbon, wherein a content of carbon is not less than 1% by mass nor more than 2% by mass, wherein an arithmetic mean height Ra measured in accordance with JIS B 0601-2001 of a decorative surface is not more than 0.03 µm, wherein a lightness index L* measured in accordance with JIS Z 8722-2000 is not less than 72 nor more than 84 in a L*a*b* color space of CIE1976 of the decorative surface, wherein a chromaticness indice a* measured in accordance with JIS Z 8722-2000 is not less than 10 nor more than 15 and a chromaticness indice b* measured in accordance with JIS Z 8722-2000 is not less than 21 nor more than 26 in the L*a*b* color space of CIE1976 of the decorative surface, wherein the titanium nitride-based sintered body has composition represented by TiNₓ, x being in a range of 0.8 ≤ x ≤ 0.96, wherein the ceramics contains nickel with a concentration of not less than 7% by mass nor more than 14.5% by mass, and niobium with a concentration of not less than 2.5% by mass nor more than 10% by mass, wherein the ceramics contains chromium with a concentration of not less than 1.5% by mass nor more than 6.5% by mass, and wherein titanium nitride as main component occupies not less than 50% by mass based on 100% by mass of all the components that constitute the titanium nitride-based sintered body, it is possible to provide ceramics for decorative component having pinkish golden color, that can enhance mechanical properties such as hardness and toughness and develops golden color with reddishness added thereto because carbon diffuses into titanium nitride to form a solid solution thereby accelerating sintering, and also can continuously provide high-grade impression, aesthetic satisfaction and mind soothing effect over a long period of time.

### Brief Description of the Drawings

Fig. 1 is a schematic view of a decorative surface, as seen planarly, showing an example of a composite decorative component of the present invention.
Fig. 2 shows an example of a watch case that is a decorative component for watch of the present invention, Fig. 2(a) is a perspective view of the watch case as seen from a front surface, and Fig. 2(b) is a perspective view of the watch case of Fig. 2(a) as seen from a back surface.
Fig. 3 is a perspective view showing another example of a watch case that is a decorative component for watch of the present invention.
Fig. 4 is a schematic view showing an example of the constitution of a watch band that is a decorative component for watch of the present invention.
Fig. 5 is a perspective view showing an example of a mobile phone that uses a decorative component for mobile terminal of the present invention.
Fig. 6 is a perspective view showing the mobile phone of the example shown in Fig. 4 in a state of chassis opened.
Fig. 7 is a perspective view showing an example of a note-type personal computer that is a decorative component for mobile terminal of the present invention.
Fig. 8 is a schematic view showing an example of a constitution of a soap case that is a decorative component for daily life articles of the present invention.
Fig. 9 is a perspective view showing an example of a coffee cup set that is a decorative component for daily life articles of the present invention.
Fig. 10 is a perspective view showing an example of a vehicle body having a decorative component for vehicle parts of the present invention mounted thereon.
Fig. 11 is a front view showing an example of a corner pole that uses a decorative component for vehicle supplies of the present invention.
Fig. 12 is a front view showing an example of a golf club that uses a decorative component for sports goods of the present invention.
Fig. 13 is a bottom view showing an example of spiked shoes that uses a decorative component for sports goods of the present invention.
Fig. 14 is a perspective view showing an example of a guitar that uses a decorative component for musical instrument of the present invention.
Fig. 15 is a schematic view showing an example of an artificial dental crown that uses a decorative component for accessory of the present invention.
Fig. 16 is a front view showing an example of an earphone unit that uses a decorative component for accessory of the present invention.
Fig. 17 is a perspective view showing an example of eyeglasses that uses a decorative component for accessory of the present invention.
Fig. 18 is a partially enlarged view showing an example of a door handle that uses a decorative component for architectural members of the present invention.

### Mode for Carrying Out the Invention

Best mode for carrying out the invention will be described below.

The ceramics for decorative component of the present invention is composed of titanium nitride-based sintered body, wherein the titanium nitride-based sintered body contains nickel, niobium, chromium and carbon, wherein a content of carbon is not less than 1% by mass nor more than 2% by mass, wherein an arithmetic mean height Ra measured in accordance with JIS B 0601-2001 of a decorative surface is not more than 0.03 µm, wherein a lightness index L* measured in accordance with JIS Z 8722-2000 is not less than 72 nor more than 84 in a L*a*b* color space of CIE1976 of the decorative surface, wherein a chromaticness indice a* measured in accordance with JIS Z 8722-2000 is not less than 10 nor more than 15 and a chromaticness indice b* measured in accordance with JIS Z 8722-2000 is not less than 21 nor more than 26 in the L*a*b* color space of CIE1976 of the decorative surface, wherein the titanium nitride-based sintered body has composition represented by TiNₓ, x being in a range of 0.8 ≤ x ≤ 0.96, wherein the ceramics contains nickel with a concentration of not less than 7% by mass nor more than 14.5% by mass, and niobium with a concentration of not less than 2.5% by mass nor more than 10% by mass, wherein the ceramics contains chromium with a concentration of not less than 1.5% by mass nor more than 6.5% by mass, and wherein titanium nitride as main component occupies not less than 50% by mass based on 100% by mass of all the components that constitute the titanium nitride-based sintered body.

The titanium nitride-based sintered body of the present invention is a sintered body that contains titanium nitride (TiN) as the main component. The main component as used herein refers to a component that occupies not less than 50% by mass based on 100% by mass of the all components that constitute the titanium nitride-based sintered body. The titanium nitride used as the main component has a feature that golden color is taken on that is suitable for decorative items, and high mechanical properties such as hardness and toughness are shown. Therefore, it is preferable that the
ceramics for decorative component of the present invention composed of titanium nitride-based sintered body contains not less than 65% by mass of titanium nitride.

Nickel is high in malleability and serves as a binder that bonds crystal grains including the titanium nitride as the main component. Niobium serves as a color regulating agent, and niobium compounds having compositions such as NbNi₃ or NbC, besides metallic niobium, may be included. Chromium bonds with oxygen contained in the air to form a dense oxide film on the decorative surface, thus making it possible to improve corrosion resistance. Carbon can improve mechanical properties such as hardness and toughness.

It is important that the ceramics for decorative component of the present invention is composed of a titanium nitride-based sintered body and includes a carbon whose content is not less than 1% by mass nor more than 2% by mass, in addition to nickel, niobium and chromium. When the titanium nitride-based sintered body having the constitution described above contains carbon in the concentration within this range, carbon diffuses to form a solid solution with titanium nitride, resulting in acceleration of sintering. Therefore, it is possible to enhance mechanical properties such as hardness and toughness and to develop pinkish golden color as a result of the addition of reddishness to golden color.

When the carbon content is less than 1% by mass, mechanical properties such as hardness and toughness cannot be made sufficiently high, reddishness to be added to golden color decreases because of small carbon content, resulting in golden color with less reddishness than that of pinkish golden color tone of the ceramics for decorative component of the present invention including the carbon whose content is not less than 1% by mass. In contrast, when carbon content is more than 2% by mass, although mechanical properties such as hardness and toughness become high, the ceramics has golden color tone with strong reddishness, and thus it is impossible to develop pinkish golden color that provides decorative values such as high-grade impression, aesthetic satisfaction and mind soothing effect as required by the user.

To make the ceramics for decorative component having pinkish golden color that provides decorative values such as high-grade impression, aesthetic satisfaction and mind soothing effect as required by the user, it is essential that the arithmetic mean height Ra of the decorative surface is not more than 0.03 µm, and the lightness index L* is not less than 72 nor more than 84, chromaticness indices a* and
b* are not less than 10 nor more than 15, and not less than 21 nor more than 26, respectively, in the L*a*b* color space of CIE1976.

As described above, according to the ceramics for decorative component of the present invention, the arithmetic mean height Ra of the decorative surface is not more than 0.03 µm. This increases a surface reflectivity to light, and increases the value of the lightness index L*, thus making it possible to develop pinkish golden color that provides decorative values such as high-grade impression, aesthetic satisfaction and mind soothing effect. When the arithmetic mean height Ra of the decorative surface is more than 0.03 µm, the value of the lightness index L* decreases to produce dark color tone, and the high-grade impression may be impaired.

The arithmetic mean height Ra may be measured in accordance with JIS B 0601-2001. When measuring by means of a contact probe type surface roughness meter with a measurement length and a cut-off point being set to 5 mm and 0.8 mm, respectively, for example, a stylus having a tip radius of 2 µm may be put into contact with the decorative surface of the ceramics for decorative component, and scanned at a speed of 0.5 mm/sec. The arithmetic mean height Ra of the decorative surface is the average of values measured at 5 points.

The lightness index L* in the L*a*b* color space of CIE1976 of the decorative surface indicates a degree of lightness or darkness of a color tone, while a higher value of the lightness index L* means lighter color tone and a lower value of the lightness index L* means darker color tone. The chromaticness indice a* indicates a proportion of red and green in color tone. A larger positive value of chromaticness indice a* means red color, and a smaller absolute value of chromaticness indice a* means dull color tone with reduced clearness, while a negative chromaticness indice a* having a larger negative value means green color. The chromaticness indice b* indicates a proportion of yellow and blue in color tone. A larger positive value of chromaticness indice b* means yellow color tone, and a smaller absolute value of b* means dull color tone with reduced clearness, while the negative chromaticness indice b* having a larger negative value means blue color.

The value of the lightness index L* is controlled to not less than 72 nor more than 84 since it is possible to give the proper lightness to pinkish golden color tone. The value of chromaticness indice a* is controlled to not less than 10 nor more than 15 and the value of chromaticness indice b* is controlled to not less than 21 nor more than 26 since it is possible to produce pinkish golden color in which proper reddishness is added to golden color.

It is preferable that the decorative surface of the ceramics for decorative component of the present invention has an open void ratio on the decorative surface of not more than 2.5%. The open void ratio on the decorative surface exerts an influence particularly on the value of the lightness index L*. A higher open void ratio results in a lower value of the lightness index L*, and a lower open void ratio results in a higher value of the lightness index L*.
By controlling the open void ratio in the decorative surface to not more than 2.5%, it is possible to control the lightness index L* to not less than 72, thus resulting in pinkish golden color. It is preferable to control the open void ratio on the decorative surface to not more than 1.8% and to control the lightness index L* to not less than 74.

The open void ratio on the decorative surface may be determined by capturing an image of the decorative surface by means of a CCD camera under a metallurgical microscope with a magnification of 200 times, and measuring the area of open voids in one field of view, with the measuring area of one field of view in the image being set to 2.25 × 10⁻² mm² and the number of fields of view being set to 20, that is, the total measuring area being set to 4.5 × 10⁻¹ mm² by means of an image analyzer (LUZEX-FS manufactured by Nireco), and calculating the ratio of the area of open voids to the total measuring area.

In the present invention, the decorative surface of the ceramics for decorative component refers only to a surface of a decorative component which is required to have decorative value, and does not mean the entire surface. In case that the ceramics for decorative component of the present invention is used in a watch case, for example, an outside surface of the watch case is subjected to aesthetic evaluation and is required to have decorative value, and is therefore referred to as the decorative surface. However, the inside surface having a drive mechanism of watch mounted thereon is not included in the decorative surface since it is not usually a surface requiring decorative value.

The values of the lightness index L* and the chromaticness indices a* and b* in the L*a*b* color space of CIE1976 of the decorative surface can be obtained by measuring in accordance with the procedure specified in JIS Z 8722-2000. For example, the measurement can be conducted by using a spectrocolorimeter (CM-3700d manufactured by Konica Minolta Holdings Inc., etc.) in combination with CIE standard light source of D65 with view angle being set to 10° and the measurement area being set to 5 mm by 7 mm.

The titanium nitride-based sintered body that constitutes the ceramics for decorative component of the present invention has the composition represented by TiNₓ, x being in a range of 0.8 ≤ x ≤ 0.96. As will be described hereinafter, color tone is influenced by the value of atomicity x in the composition formula of TiNₓ. As the value of atomicity x becomes smaller, the color tone changes from pinkish golden color to pale pinkish golden color. As the value of atomicity x becomes larger, the color tone changes to dull and deep pinkish golden color. Accordingly, the value of atomicity x in the composition formula TiNₓ is not less than 0.8 nor more than 0.96 from such a point of view. When the value of atomicity x is within this range, lustrous color tone is further enhanced, so that higher high-grade impression and higher aesthetic satisfaction can be provided.

Titanium nitride can be substituted by or react with oxygen and carbon contained in the degreasing atmosphere or sintering atmosphere, and turn to titanium oxycarbonitride (TiCNO). Therefore, the value of atomicity x as assumed in case that that a titanium nitride sintered body has the composition formula of TiNₓ can be determined by using an oxygen-nitrogen analyzer and a carbon analyzer as follows: Specifically, after measuring the contents of oxygen, nitrogen and carbon in the titanium nitride-based sintered body with these analyzers, titanium content is determined by subtracting the contents of oxygen, nitrogen and carbon from 100% by mass. Since titanium content and nitrogen content divided by the respective atomic weights give the number of moles of the respective elements contained, The number of moles of nitrogen in case that the number of moles of titanium is set to be 1 is defined as the value of atomicity x.

It is essential that the ceramics for decorative component of the present invention contains not less than 7% by mass nor more than 14.5% by mass of Nickel, and not less than 2.5% by mass nor more than 10% by mass of niobium. Nickel is high in malleability and serves as a binder that bonds the crystal grains including titanium nitride as the main component, and is therefore preferably added in as large a quantity as possible. However, too high content of nickel based on 100% by mass of all components that constitute the ceramics for decorative component may be caused to react with sweat and elute when it is put on a human body, thus changing the color of the ceramics for decorative component from pinkish golden color that provides decorative values such as high-grade impression, aesthetic satisfaction and mind soothing effect as required by the user.

In addition, although the chromaticness indice a* in the L*a*b* color space of CIE1976 becomes higher, both the lightness index L* and the chromaticness indice b* become lower. Thus, the nickel content is not less than 7% by mass nor more than 14.5% by mass. In case that the ceramics for decorative component is used in articles that are put on human bodies such as watch case or links of band, in particular, the nickel content is more preferably not more than 10% by mass.

The reason for setting the niobium content to not less than 2.5% by mass nor more than 10% by mass is that niobium serves as a color tone regulating agent that increases the lightness index L* by forming a solid solution with titanium nitride or melting inside nickel, but may make it difficult to sinter since covalency is high when niobium content is too high.

It is more preferable that the niobium content is not less than 3% by mass nor more than 8% by mass. This is because niobium has an effect of suppressing crystal grains from growing and thereby increasing the crystal boundaries, so that the incident light is significantly influenced by mirror reflection caused by the crystal that forms the decorative surface and by the dispersive reflection caused by the crystal boundaries, thus resulting in higher lightness index L* of the decorative surface. In addition, high synergy effect of the color tone enhances the lustrous color tone and provides high-grade impression and aesthetic satisfaction, thereby achieving mind soothing effect through visual sense.

Meanwhile, reflection generally includes mirror reflection and dispersive reflection. Mirror reflection in the present invention refers to a reflection in a case where an angle of incidence of light onto mirror-smooth decorative surface, or microscopically onto the crystal that forms the decorative surface is equal to an angle of reflection therefrom. Dispersive reflection refers to a reflection in a case where light that has entered in the crystal boundary undergoes random reflections repeatedly and then exit to an outside.

Surface roughness of the crystal surface can be adjusted by barrel polishing operation to the crystal that forms the decorative surface as described hereinafter. When surface roughness of the crystal surface which does not include crystal boundaries observed under an atomic force microscope is controlled to 1 to 2 nm in terms of the arithmetic mean height Ra, reflection on the crystal surface partially changes from mirror reflection to dispersive reflection, so that chromaticness indice b* of the decorative surface can be increased to not less than 24 which is preferable as resulting in vivid pinkish golden color.

It is preferable that nickel reacts with niobium to precipitate as a compound nickel-niobium, for example, NbNi₃. Precipitation of NbNi₃ causes the lightness index L* to increase so as to produce an impression of noble lightness. Nickel-niobium such as NbNi₃ can be detected by X-ray diffraction analysis.

It is essential that the ceramics for decorative component of the present invention contains not less than 1.5% by mass nor more than 6.5% by mass of chromium. Chromium bonds with oxygen contained in the air to form a dense oxide film on the decorative surface, so as to improve corrosion resistance. Moreover, when nickel forms grain boundaries that bond titanium nitride in the state of nickel surrounding chromium, nickel reacts with chromium to form nickel-chromium compound so as to suppress nickel from being ionized and thus eluting. However, since chromium content affects the color clearness, it is essential to contain not less than 1.5% by mass nor more than 6.5% by mass of chromium in order to suppress nickel from eluting while achieving corrosion resistance and clearness at the same time.

The state of nickel surrounding chromium refers to a state of chromium being surrounded by crystal boundaries without making contact with titanium nitride crystal. This state can be confirmed by comparing an image of the decorative surface captured by a scanning electron microscope and an image of the decorative surface that shows the distribution of nickel and chromium detected by energy dispersion type (EDS) X-ray micronalyser.

Contents of titanium, nickel, niobium and chromium can be measured by fluorescence X-ray analysis (XRF). Specifically, at least two kinds of powder mixture comprising titanium nitride, nickel, niobium and chromium each having different concentration are previously prepared, and are molded by a pressing method to make standard samples. The standard samples are irradiated with X rays, and calibration curves are drawn by applying the least squares method to the relation between the intensities of fluorescence X rays and known concentrations. Then the ceramics for decorative component of the present invention is ground into powder and are molded by a pressing method to make a measurement sample. The measurement sample is irradiated with X rays, and the intensity of fluorescence X ray is measured so as to determine the concentration from the calibration curve. Nitrogen can be measured by an oxygen-nitrogen analyzer, and carbon can be measured by a carbon analyzer.

It is preferable that the ceramics for decorative component of the present invention composed of the titanium nitride-based sintered body has thermal conductivity of not less than 22 W/(m·K) nor more than 26 W/(m·K). With thermal conductivity of not less than 22 W/(m·K), good heat dissipation can be achieved. This enables it to quickly dissipate the heat generated by electronic components such as insulated gate-bipolar-transistor (IGBT) to the outside, so as to reduce a possibility of malfunction. Therefore, it is preferable to use the ceramics for decorative component of the present invention in part of a mobile terminal having electronic components packaged therein.

When the thermal conductivity is not more than 26 W/(m·K), dew condensation can be suppressed from occurring on the surface of the ceramics for decorative component of the present invention. Therefore, when an emblem or other component of a vehicle is formed from the ceramics for decorative component of the present invention, dew condensation is less likely to occur, and thus resulting in little loss of aesthetic value even if it is in the cold atmosphere of a morning in winter. It is preferable that thermal conductivity is in the range of not less than 22 W/(m·K) nor more than 26 W/(m·K) also because heat dissipation characteristic and thermal shock resistance can both be secured. It is more preferable that thermal expansion coefficient in a temperature range from 40°C to 800°C is not less than 8.5 × 10⁻⁶/°C nor more than 9.7 × 10^{- 6}/°C. The thermal expansion coefficient can be determined in accordance with JIS R 1618-2002.

In order to maintain the luster of the decorative surface of the ceramics for decorative component of the present invention, the mean crystal grain size is preferably not less than 1 µm nor more than 10 µm. The mean crystal grain size can be determined by the following procedure. On an image of a fracture surface captured with magnification of 1,000 times to 3, 000 times by a scanning electron microscope, eight straight lines having the same length are drawn in an area of 86 to 110 µm by 65 to 92 µm. The mean crystal grain size can be obtained by counting the number of crystal grains lying on the eight straight lines, and then dividing this number by the total length of the lines. The length of one line may be set to 80 µm when the magnification is 1,000 times, or 27 µm when the magnification is 3,000 times.

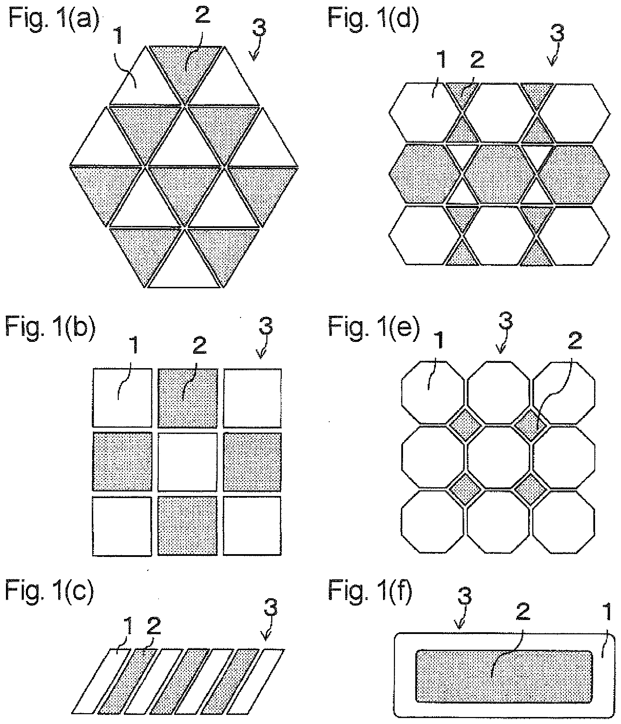

Fig. 1 is a schematic view of the decorative surface as seen planarly, showing an example of a composite decorative component of the present invention.

A composite decorative component 3 shown in Fig. 1 is an example of a decorative surface as seen planarly which comprises ceramics 1 for decorative component that develops pinkish golden color of the present invention, and a decorative component 2 having the decorative surface with color tone different from that of the ceramics for decorative component 1 and being arranged along the ceramics for decorative component. The ceramics for decorative component 1 and decorative component 2 have a triangle shape in Fig. 1(a), a quadrangle shape in Fig. 1(b), a parallelogram shape in Fig. 1(c), a combination of a hexagon shape and a triangle shape in Fig. 1(d), parts have a combination of an octagon shape and a quadrangle shape in Fig. 1(e), and a combination of a decorative component 2 having a quadrangle shape and ceramics 1 for decorative component that surrounds the decorative component 2 in Fig. 1(f).

When color tone of the decorative component 2 is specifically violet color tone that is different from that of the ceramics for decorative component 1, it is possible to raise consumer appetite when used for window advertisement that requires decoration, and interior miscellaneous goods.

When the decorative component 2 has black color tone, visibility is enhanced by a combination of color tone of the ceramics for decorative component 1 of the present invention with pinkish golden color, and thus the decorative component can be suitably used in applications that require visibility from the distant place, for example, display part such as guide plate. Furthermore, when the decorative component 2 has silver color tone, it is possible to enhance decorativeness with high-grade impression.

Since the decorative component 2 may have color tone that is different from that of the ceramics for decorative component 1 of the present invention to enhance decorativeness, there is not restriction on the material. As a matter of course, the shapes and combinations of the ceramics for decorative component 1 and the decorative component 2 are not limited to examples shown in Fig. 1(a) to (f).

The decorative component for watch of the present invention is characterized in that it is constituted from the ceramics for decorative component with the above constitution of the present invention, and examples thereof include watch case, and links of watchband.

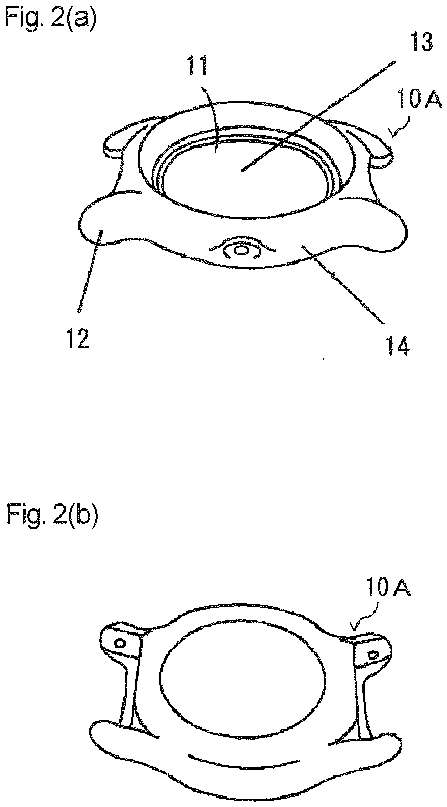

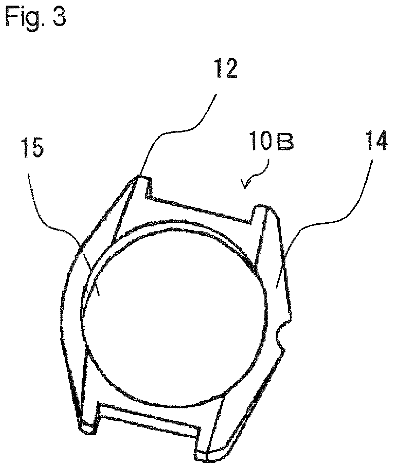

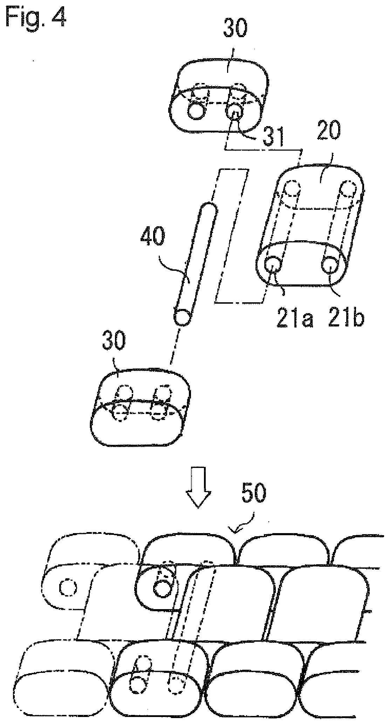

Fig. 2 shows an example of a watch case that is a decorative component for watch of the present invention, Fig. 2(a) is a perspective view of the watch case as seen from the front side, and Fig. 2(b) is a perspective view of the watch case of Fig. 2(a) as seen from the back side. Fig. 3 is a perspective view showing another example of the watch case that is the decorative component for watch of the present invention. Fig. 4 is a schematic diagram showing an example of constitution of the watchband that is the decorative component for watch of the present invention. Identical members are denoted with the same reference numeral in these drawings.

A watch case 10A shown in Fig. 2 has a recess 11 that houses a movement (drive mechanism) not shown, and legs 12 which engage a watchband (not shown) for wearing the watch on a wrist, and the recess 11 is constituted from a thin bottom 13 and a thick case body 14. The watch case 10B shown in Fig. 3 has a hole 15 that accommodates a movement (drive mechanism) not shown, and legs 12 formed on the case body 14 which engage a watchband (not shown) for wearing the watch on a wrist.

The band links that constitute the watchband 50 shown in Fig. 4 include: inner links 20 each having through hole 21 into which a pin 40 is inserted; and outer links 30 being disposed to sandwich the inner link 20 and each having pin holes 31 in which the ends of the pin 40 are inserted. The inner link 20 and the outer links 30 are sequentially linked with each other by inserting the pin 40 into the through hole 21 of the inner link 20, and engaging both ends of the inserted pin 40 in the pin holes 31 of the outer links 30, thereby to assemble the watchband 50.

The decorative component for watch of the present invention used in the watch cases 10A, 10B and the band links that constitute the watchband 50 are formed from the ceramics for decorative component of the present invention, and therefore provide high-grade impression and aesthetic satisfaction for watch, and achieves mind soothing effect through visual sense.

The ceramics for decorative component of the present invention preferably has Vickers hardness (Hv) of not less than 8 GPa on the decorative surface, since the level of Vickers hardness (Hv) of the decorative surface is one of factors that affect the long-term reliability. When Vickers hardness (Hv) is controlled within the above range, the decorative surface is less likely to be mechanically impaired even when put into contact with hard substances such as ducts made from glass or metallic particles. Vickers hardness (Hv) of the decorative surface may be measured in accordance with JIS R 1610-2003.

It is preferable that the decorative surface has higher fracture toughness, since fracture toughness affects the wear resistance of the decorative surface. The ceramics for decorative component of the present invention preferably has fracture toughness of not less than 4 Mpa·m^{1/2}. The fracture toughness may be measured in accordance with indentation-fracture method (IF method) in accordance with JIS R 1607-1995.

In case that the ceramics for decorative component is applied to an article that is worn by a person, the lighter the weight, the more it is preferred. Therefore, it is preferable that apparent density of the ceramics for
decorative component of the present invention is not more than 6 g/cm³ (excluding 0). The apparent density may be measured in accordance with JIS R 1634-1998. When the ceramics for decorative component is used to form the inner links 20 that are part of the links of watch band, it is preferable that the ceramics for decorative component of the present invention has a tensile strength of not less than 196 N (Newton) since the inner links 20 are frequently subjected to tensile load. The tensile strength may be measured by inserting pins (not shown) that is made of a cemented carbide and is longer than the through hole 21 into the through holes 21a, 21b of the inner link 20, followed by pulling the pin in the opposite direction and reading the load applied when the inner link 20 is ruptured by a load cell.

When the ceramics for decorative component is used to form a watch case or links of watch band, it is preferable that the proportion of the ferromagnetic metal such as cobalt (Co) that has mass susceptibility of not less than 162 G-cm³/g is preferably 0.1% by mass in total based on 100% by mass of the ceramics for decorative component, with an adverse effect to the movement (drive mechanism) not shown being taken into consideration. The proportion of the ferromagnetic metal can be determined by inductively coupled plasma (ICP) fluorescence spectroscopy.

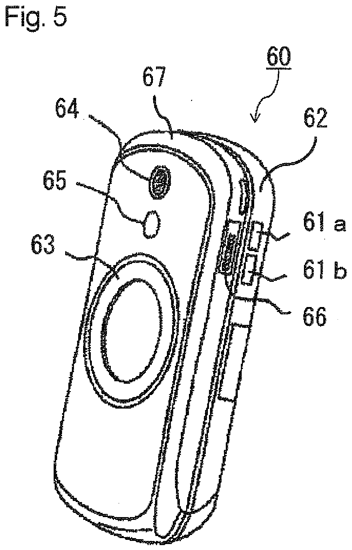

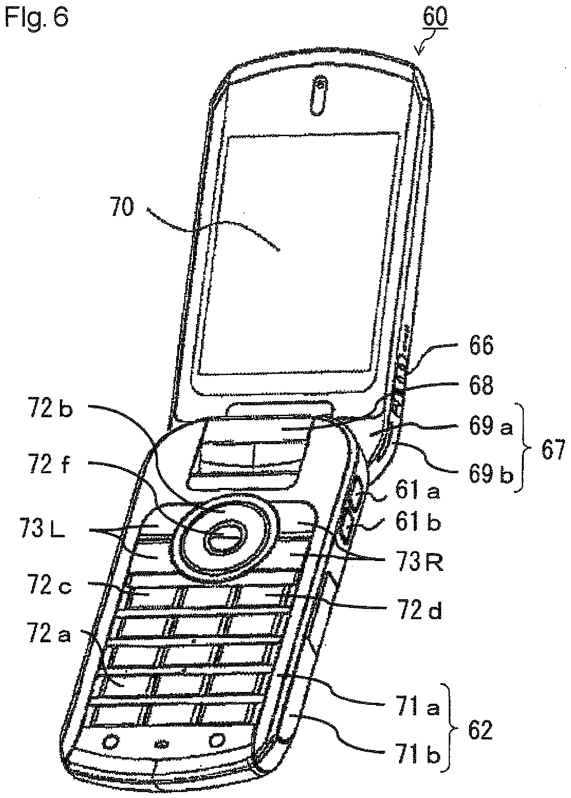

Fig. 5 is a perspective view showing an example of mobile phone that uses a decorative component for mobile terminal of the present invention. Fig. 6 is a perspective view showing the mobile phone shown in Fig. 5 in a state of chassis opened.

It is preferred that the decorative component for mobile terminal of the present invention is formed from the ceramics for decorative component of the present invention, and specific examples thereof include various control keys, cases and switches of the mobile phone of the examples shown in Figs. 5 and 6.

The mobile phone 60 of the example shown in Fig. 5 includes a mode key 61a for changing the mode of the mobile phone 60 to a radio mode for listening to radio broadcast, a music mode for listening to music and the like, and a silencer key 61b for putting the mobile phone 60 into silent mode which are provided on a first chassis 62, and includes a touch sensor 63 for entering commands by inspecting touch with a finger or other object thereon, a camera 64 for capturing an image, a light 65 and a slide switch 66 for setting enabling or disabling the entry through the touch sensor 63 and the like provided on a second chassis 67.

Fig. 6 shows an example of the mobile phone 60 in a state where the second chassis 67 remains opened. The first chassis 62 and the second chassis 67 are linked to each other via a hinge 68, so that the second chassis 67 can be freely opened. The second chassis 67 has a front case 69a and a rear case 69b, while a liquid crystal display 70 is provided on the front case 69a.

The first chassis 62 also includes a front case 71a and a rear case 71b, while various control keys are provided on the front case 71a. The control keys include numeric keys 72a for entering telephone numbers, cursor movement keys 72b for moving the cursor over various functions menu, a talk key 72c to be pressed to start talking when receiving a call, a power/hang up key 72d for turning the power on or off and hanging up the line to end talking, function keys 73L, 73R disposed on the left and right sides of a center key 72f which is disposed at the center of the cursor movement key 72b, etc.

When at least one of the front cases 69a and 71a and the rear cases 69b and 71b as the above cases, the numeric keys 72a, the cursor movement keys 72b, the talk key 72c, the power/hang up key 72d, the center key 72f, the function keys 73L and 73R, etc. as the operation keys is formed from the ceramics for decorative component of the present invention, high-grade impression, aesthetic satisfaction and mind soothing effect can be provided with the user over a long period of time to make the user to feel satisfaction through procession of the mobile phone 60 having such color tone. Also because the ceramics for decorative component of the present invention has favorable property for color coordination, it is capable of satisfying the diversity of user's preference by combining with members having various color tones.

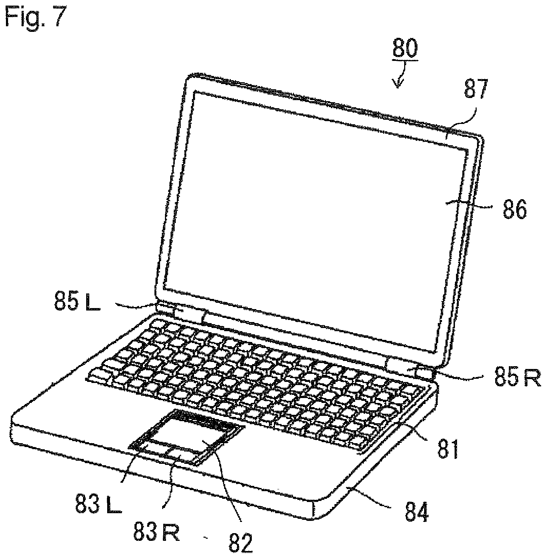

Next, Fig. 7 is a perspective view showing an example of a note-type personal computer that uses a decorative component for mobile terminal of the present invention.

A note-type personal computer 80 shown in Fig. 7 consists of: a body side casing 84 equipped with a keyboard 81, a track pad 82 and button switches 83L, 83R; and a display side casing 87 equipped with a display 86 fixed to the body side casing 84 through hinges 85L, 85R so as to be capable of freely opening and closing.

The keyboard 81 consists of a plurality of keys and enables input of characters and call up of functions by pushing of keys. The track pad 82 consists of a pressure-sensitive or electrostatic pointing device and is used for move of a pointer and command input on a screen of the display 86. For example, it is used for specification of the file icon-displayed on the display 86 and selection of application programs, and is also used for drag of the icon on the display 86 and plural selections of character string on a text file by a combination operation of button switches 83L, 83R.

The button switch 83L is used for command such as opening and closing of a file specified or selected by a pointing function of the track pad 82, or execution of processing, in addition to the above combination operation. The button switch 83R has a function to display a context menu on a screen of a display 86, and to display attributed information of the file specified or selected by a pointing function of the track pad 82. The context menu as used herein means a function to pop up display a selectable processing on the screen of the display 86.

By forming at least one of key and button switches 83a, 83b of the above keyboard 81 from the ceramics for decorative component of the present invention, it is made possible to provide the user with high-grade impression, aesthetic satisfaction and mind soothing effect over a long period, and to make the user to feel satisfaction through procession of the note-type personal computer 80 having such color tone.

A description was made using the mobile phone 60 and the note-type personal computer 80 as an example of mobile terminals. However, application of the ceramics for decorative component of the present invention to mobile terminal is not limited to the mobile phone60 and the note-type personal computer 80. The present invention can be applied to various portable information terminals, whose components are required to have decorative value, such as portable information terminal (PDA: Personal Digital Assistant), portable car navigation system and portable audio player.

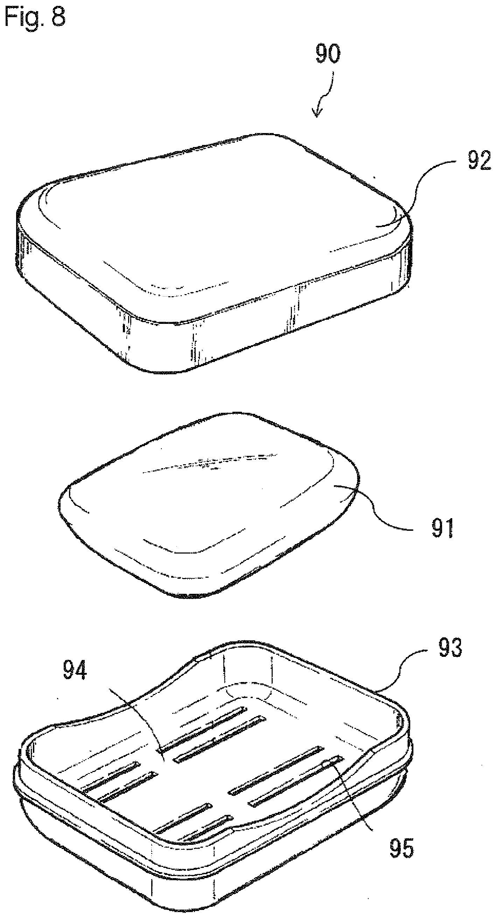

Next, Fig. 8 is a schematic diagram showing an example of constitution of a soap case that is a decorative component for daily life articles of the present invention.

The soap case 90 consists of a case body 93 and a cap 92, wherein a placing surface 94 of the case body 93 whereon a soap 91 is to be placed includes draining slits 95 for draining water carried by the soap 91 formed therein. When the soap 91 is not used, the soap 91 is placed on the placing surface 94, and is accommodated by putting the cap 92 onto the case body 93. When the soap 91 is used, the cap 92 is removed from the case body 93 and the soap 91 is taken out. By placing the soap 91 on the placing surface 94 of the case body 93 after use, water adhered on the soap 91 can be drained through the drain slits 95, so as to prevent the soap 91 from being soaked with water.

By forming the cap 92 or the case body 93 of the soap case 90 from the ceramics for decorative component of the present invention, it is made possible to provide many users with the joy of possessing it and to give high-grade impression, aesthetic satisfaction and mind soothing effect through visual sense during use.

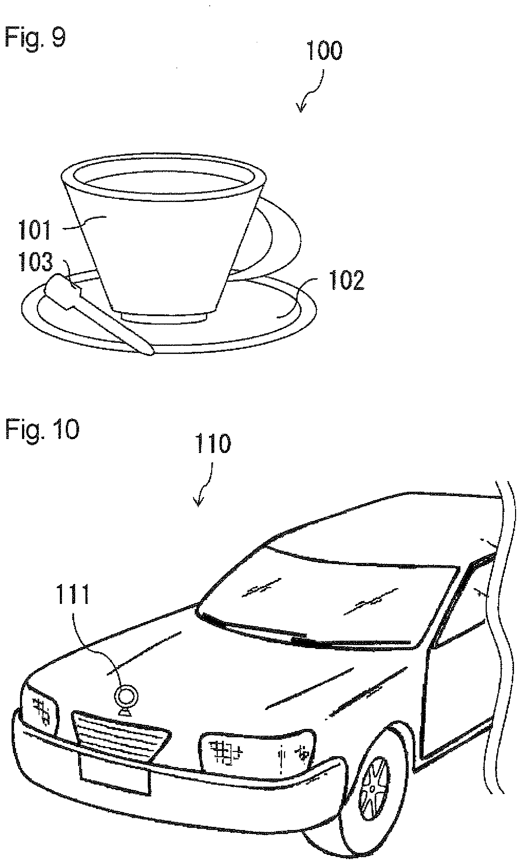

Fig. 9 is a perspective view showing an example of a coffee cup set that is another example of a decorative component for daily life articles of the present invention.

The coffee cup set 100 shown in Fig. 9 consists of a coffee cup 101, a saucer 102 and a spoon 103. By forming the coffee cup 101, the saucer 102 and the spoon 103 from the ceramics for decorative component of the present invention, it is made possible to provide many users with the joy of possessing it, and to give high-grade impression, aesthetic satisfaction and mind soothing effect through visual sense during use.

Since the ceramics for decorative component of the present invention has favorable property for color coordination, at least one of the coffee cup 101, the saucer 102 and the spoon 103 may be formed from the ceramics for decorative component of the present invention, and can also be used in combination with other members having different color tones.

The decorative component for daily life articles of the present invention can be preferably applied to, in addition to the soap case 90 and the coffee cup set 100, the handle of tooth brush or shaver, earpick, scissors and other decorative component for daily life articles. By using the ceramics for decorative component of the present invention for toiletry goods marked with various logos in the bath rooms and toilet rooms of a hotel, it is made possible to provide high-grade impression, aesthetic satisfaction and mind soothing effect.

Next, Fig. 10 is a perspective view showing an example of a vehicle body having a decorative component for vehicle parts of the present invention mounted thereon.

The vehicle body 110 shown in Fig. 10 has an emblem 111 which is decorative component for vehicle parts. By forming the emblem 111 from the ceramics for decorative component of the present invention, it is made possible to provide the user with high-grade impression, aesthetic satisfaction and mind soothing effect through visual sense, and improve the decorative value of the vehicle body 110. While Fig. 10 shows the emblem 111 that is mounted on the front of the vehicle body 110, decorative value of the vehicle body 110 can be improved also by attaching the emblem 111 formed from the ceramics for decorative component of the present invention that shows the manufacturer's name or the model name, on the rear of the vehicle body 110.

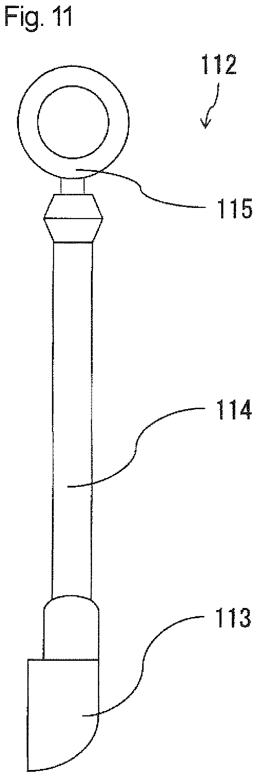

Fig. 11 is a front view showing an example of corner pole that uses the decorative component for vehicle parts of the present invention.

The corner pole 112 shown in Fig. 11 is installed so as to mark the left front corner of the vehicle (in the case of a right-hand drive vehicle) which is difficult to see from the driver seat when moving in or out of a parking lot, and comprises a mount 113 to be fastened onto the vehicle body, a pole unit 114 and a lighting unit 115 consisting of LED or the like. It is preferred to form the pole unit 114 of the corner pole 112 from the ceramics for decorative component of the present invention, or mounting the emblem formed from the ceramics for decorative component of the present invention instead of the lighting unit 115, so as to improve decorative value of the vehicle body as well as of the corner pole 112.

In addition to the emblem 111 and the corner pole 112, the decorative component for vehicle parts of the present invention may be applied to a part of wheel cap, a part of hood ornament mounted on the bonnet of the vehicle body, small articles and accessories installed within the vehicle or a part thereof, with favorable effect of improving the decorative value.

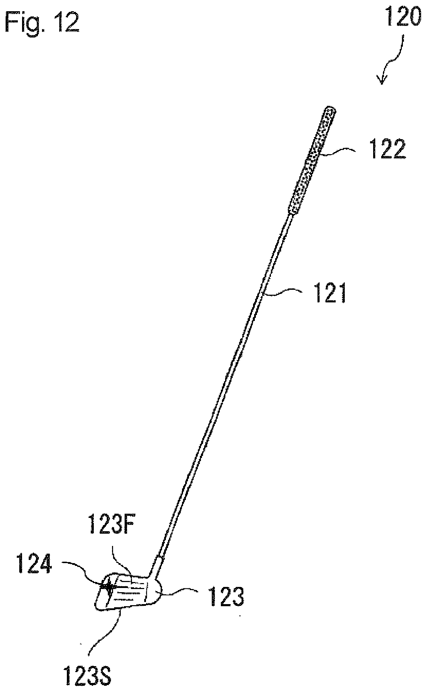

Next, Fig. 12 is a front view showing an example of golf club that uses the decorative component for sports goods of the present invention.

The golf club 120 shown in Fig. 12 includes a shaft 121, a grip 122 attached to one end of the shaft 121 and a head 123 attached to the other end of the shaft 121. The head 123 includes an impact face 123F that hits a golf ball, and a sole surface 123S that touches the ground. It is preferred to embed an accessory 124 formed from the ceramics for decorative component of the present invention in the impact face 123F, as shown in Fig. 12, since the decorative value is improved.

In the decorative component for sports goods of the present invention, it is preferred that, in addition to the impact face 123F, the accessory 124 formed from the ceramics for decorative component of the present invention is embedded in the sole surface 123S or the grip 122, and the grip 122 itself is formed from the ceramics for decorative component of the present invention.

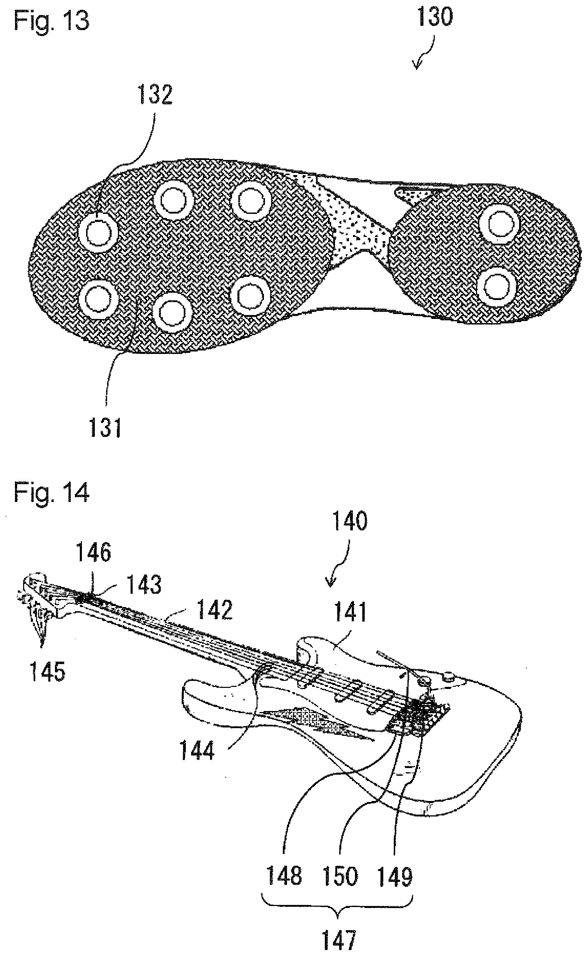

Fig. 13 is a bottom view showing an example of spike shoes that uses the decorative component for sports goods of the present invention.

The spike shoes 130 shown in Fig. 13 are used in, for example, soccer or rugby, and has a plurality of studs 132 planted in sole 131 to protrude therefrom so as to stabilize a pivot foot when kicking a ball. The studs 132 formed from the ceramics for decorative component of the present invention have the effects of, besides the improvement in decorative value, higher wear resistance than that of studs made of aluminum alloy that have hitherto been used, so as to decrease the frequency of replacement of the studs 132, and thereby reducing the cost incurred from the replacement. The studs 132 may be covered by a transparent resin to prevent the studs 132 from being chipped during a game.

Next, Fig. 14 is a perspective view showing an example of guitar that uses the decorative component for musical instrument of the present invention.

The guitar 140 shown in Fig. 14 consists mainly of a body 141 and a neck 142 that extends forward from the body 141. Disposed near the distal end of the neck 142 is a nut 143, and a tuning peg 145 capable of adjusting the tension of the string 144 is provided beyond the nut 143 for each of strings 144. A clamp mechanism 146 is provided near the nut 143 so as to hold the strings 144 and to prevent from moving with respect to the nut 143.

The body 141 has a tremolo arm 147 for producing impressive sound effect by increasing or decreasing the tensions of the strings 144 at the same time. The tremolo arm 147 includes: a base plate 148 that is attached to the body 141; a bridge saddle 149 that is held on the base plate 148 and holds the strings 144 in tunable state; and a tremolo bar 150 that actuates the tremolo arm 147. By forming the base plate 148, the bridge saddle 149, the tremolo bar 150 or the like of this guitar 140 from the ceramics for decorative component of the present invention, it is made possible to improve the decorative value of the guitar 140. This provides the joy of possessing the guitar 140 and helps to captivate a large audience.

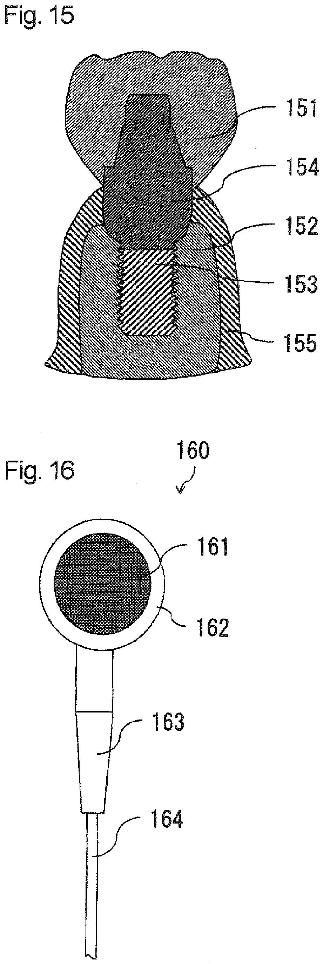

Next, Fig. 15 is a schematic diagram showing an example of artificial dental crown that uses the decorative component for accessory of the present invention.

The schematic diagram of Fig. 15 shows an artificial dental crown 151 attached onto an abutment 154 that is fastened onto an artificial dental root (implant) 153 which is embedded in a jaw bone 152 within a gingival 155. When the artificial dental crown 151 is formed from the ceramics for decorative component of the present invention, the tooth shines in pinkish golden color, and thus it is possible to give enthusiastic feeling to users who like decorating their teeth.

The artificial dental root 153 embedded in the jaw bone 152 is formed in the shape of screw. A hard bond layer may be formed, on the portion that is formed in the shape of screw, from a biodegradable material that contains at least one kind selected from among chitin, collagen and derivatives thereof that have capability to induce a generation of new bone. A base of the abutment 154 may be provided with a soft bond layer formed from the crosslinked biodegradable material, so as to make contact with the gingival 155 located over the jaw bone 152.

The ceramics for decorative component of the present invention is composed of titanium nitride-based sintered body, and is therefore biocompatible. It is preferable to make use of this advantage through application to the artificial dental root 153 and the abutment 154, as well as the artificial dental crown 151.

Fig. 16 is a front view showing an example of earphone unit that uses the decorative component for accessory of the present invention.

The earphone unit 160 shown in Fig. 16 includes a speaker 161 that is inserted into the ear of the listener to produce sound waves, a case 162 that houses the speaker 161, and a cord 164 that feeds electric signals to the speaker 161 via a lead 163 that is in contact with the case 162.

By forming the case 162 of the earphone unit 160 from the ceramics for decorative component of the present invention, it is made possible to provide the decorative component for accessory that improves the decorative value, and to provide many users with high-grade impression, aesthetic satisfaction and mind soothing effect through visual sense.

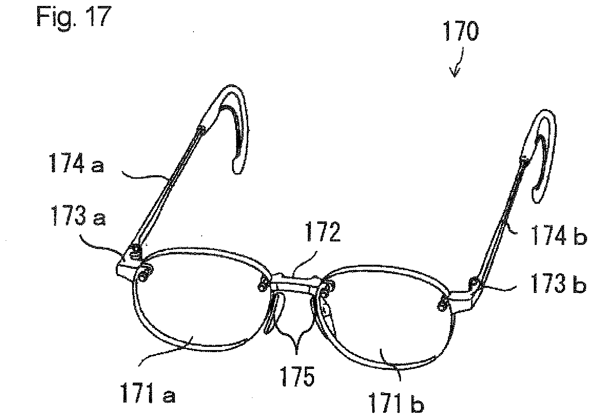

Fig. 17 is a perspective view showing an example of eyeglass frame that uses the decorative component for accessory of the present invention.

The eyeglasses 170 shown in Fig. 17 includes: a pair of lenses 171a, 171b that provide vision correction or protection of eyes against ultraviolet rays; a bridge 172 that links the pair of lenses 171a, 171b together; armors 173a, 173b that connect to the respective lenses 171a, 171b; temples 174a, 174b that connect to the armors 173a, 173b so as to be capable of swiveling through the hinge; and a nose pad 175 attached via nose pad link members to the lenses 171a, 171b, respectively.

By forming at least one of the bridge 172, the temples 174a, 174b and the nose pad 175 of this eyeglasses 170 from the ceramics for decorative component of the present invention, it is made possible to provide the decorative component for accessory that improves the decorative value, and provides many users with high-grade impression, aesthetic satisfaction and mind soothing effect through visual sense.

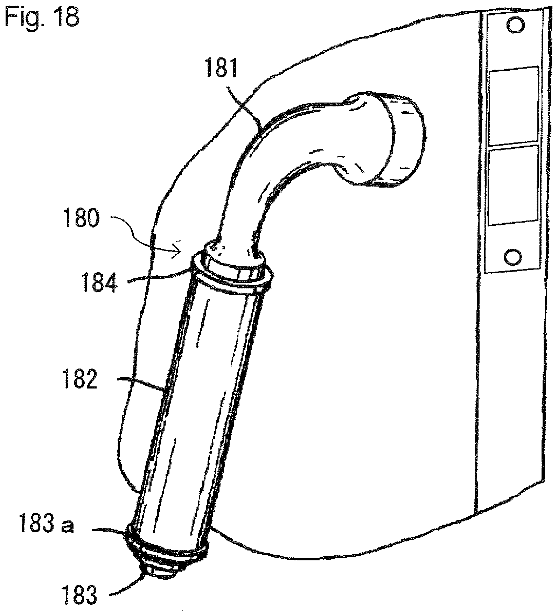

Fig. 18 is a partially enlarged view showing an example of a door handle that uses a decorative component for architectural members of the present invention.

A door handle 180 shown in Fig. 18 includes a body 181 extending in an L-shape and a cylindrical grip 182 fitted to the end of the body 181, and the grip 182 is fixed to the body 181 by interposing between a nut 183 with a flange 183a formed thereon and a flange 184.

By forming the grip 182 of the door handle 180 from the ceramics for decorative component of the present invention, it is made possible to provide the decorative component for architectural members that improves the decorative value, and provides many users with high-grade impression, aesthetic satisfaction and mind soothing effect through visual sense.

The method for manufacturing ceramics for decorative component of the present invention will be described below.

In order to obtain ceramics for decorative component of the present invention, first, specified amounts of powders of titanium nitride that becomes the main component of the sintered body, nickel, niobium, chromium and carbon are weighed, ground and mixed to prepare the raw material. More specifically, a powder of titanium nitride having a mean particle size of 10 to 30 *µ*m, a powder of nickel having a mean particle size of 10 to 20 *µ*m, a powder of niobium having a mean particle size of 20 to 50 *µ*m, a powder of chromium having a mean particle size of 20 to 50 *µ*m, and a powder of carbon having a mean particle size of 0.1 to 10 *µ*m are prepared. 7 to 14.5% by mass of a nickel powder, 2.5 to 10% by mass of a niobium powder, 1.5 to 6.5% by mass of a chromium powder and 1 to 2% by mass of a carbon powder, with the remainder being a titanium nitride powder is weighed, ground and mixed.

To form the crystal grain boundary phase that bonds titanium nitride in the state of nickel atoms surrounding chromium atoms, it is necessary to increase the probability of a nickel powder and a chromium powder making contact with each other. The probability can be increased by increasing the grinding and mixing time, for example, the grinding and mixing time may be set to not less than 150 hours. The raw material to be prepared may contain silicon, phosphorus, sulfur, manganese, iron, etc. as inevitable impurities. Since these elements can have adverse effect on the color tone of the decorative surface, it is preferable that concentration of each of these elements is less than 0.5% by mass.

In view of high wear resistance and color tone which has high decorative value, purity of each of the powders is preferably not less than 99%. There arises no problem if a part of the titanium nitride powder reacts with the nickel powder thereby forming a small amount of TiNi. To form the titanium nitride-based sintered body that forms the ceramics for decorative component and has the composition of TiNₓ with x satisfying 0.8 ≤ x ≤ 0.96, titanium nitride having the composition of TiNₓ with x satisfying 0.7 ≤ x ≤ 0.9 may be used.

The prepared raw material is mixed with an organic solvent, for example isopropanol, and ground and mixed using a mill. With a predetermined quantity of paraffin wax added as a binder, the mixture is formed into a desired shape such as disk, plate, ring, etc. by dry pressure molding process, cold hydrostatic pressure molding process, extrusion molding process or the like.

In case that the dry pressure molding process is employed as the molding process, it is preferable to set the molding pressure in a range from 49 to 196 MPa, since the molding pressure has an influence on the open void ratio and the Vickers hardness (Hv) of the decorative surface. It is made possible to make a sintered body having a relative density of not less than 95%, an open void ratio of not more than 2.5% and Vickers hardness (Hv) of not less than 8 GPa by setting the molding pressure in a range from 49 to 196 MPa. It also elongates the service life of dies.

The green compact thus obtained is degreased in a non-oxidizing atmosphere such as nitrogen atmosphere or inert gas atmosphere, as required. The green compact is then sintered in a gas atmosphere of at least one selected from nitrogen and inert gas, or in vacuum, thereby to obtain a sintered body having a relative density of not less than 95%. In case of being sintered in an oxidizing atmosphere, titanium is oxidized, thus resulting in that most thereof turn into titanium oxide represented by the composition formula TiO₂, and the ceramics is influenced by original white color tone of titanium oxide, and thus the color of the entire ceramics for decorative becomes dull whitish color by sintering the green compact in a gas atmosphere of at least one selected from nitrogen and inert gas, or in vacuum.

In case that the ceramics for decorative component is obtained by sintering in vacuum, the vacuum degree is preferably not more than 1.33 Pa. The reason why the vacuum degree is set to not more than 1.33 Pa is as follows. That is, the color of the ceramics for decorative component does not become dull whitish color as a result of oxidization of titanium during sintering, and therefore the ceramics for decorative component having pinkish golden color tone can be obtained. Furthermore, the sintering temperature can be preferably adjusted within a range from 1,200°C to 1,800°C, thus making it possible to make a sintered body having a relative density of not less than 95% and an open void ratio of not more than 2.5% with lower cost of sintering.

In order to make the titanium nitride-based sintered body having thermal conductivity of not less than 22 W/(m·K), the total content of lithium, sodium, potassium, iron, calcium, magnesium, strontium, barium, manganese and boron, that cause thermal conductivity to decrease, may be controlled to not more than 0.3% by mass based on 100% by mass of the titanium nitride powder. In contrast, in order to make the titanium nitride-based sintered body having thermal conductivity of not more than 26 W/(m·K), sintering temperature is set to not lower than 1,200°C nor higher than 1,550°C since a growth of crystal grains must be suppressed.

The surface of the thus obtained sintered body which is required to have decorative value is lapped on a lapping machine, followed by barrel polishing process. As a result, the surface of the sintered body has pinkish golden color tone, thereby providing the ceramics for decorative component of the present invention. It is preferable that voids that open in the decorative surface are controlled so that the maximum width of the opening is not more than 30 µm. By controlling the size of opening within this range, entry of bacteria, polluting material and other foreign matter into the voids can be suppressed.

The arithmetic mean height Ra of the decorative surface can be controlled to not more than 0.03 µm, through lapping process by supplying diamond abrasives having small mean particle size onto a lapping stage made of tin. For example, diamond abrasives having a mean particle size of not more than 1 µm may be used. In the barrel polishing process, a rotary barrel polishing machine may be used with a polishing medium made of green carborundum (GC) charged into the rotary barrel polishing machine so as to carry out wet polishing operation for 24 hours.

In case that the product made from the ceramics for decorative component has a complicated shape, the material may be first formed in a block or other convenient shape which resembles the product shape by dry pressure molding process, cold hydrostatic pressure molding process, extrusion molding process, injection molding process or the like, with the resultant green compact being sintered, ground into the product shape and finished by lapping and barrel polishing. Alternatively, the material may be formed directly into the product shape by injection molding process, with the resultant green compact being sintered and subjected to lapping and barrel polishing.

The ceramics for decorative component of the present invention obtained as described above has such a type of pinkish golden color that is highly evaluated as especially beautiful color tone, that produces high-grade impression and aesthetic satisfaction, and therefore provides mind soothing effect through visual sense. As described above, the ceramics for decorative component can be preferably used as decorative component for watch such as watch case and links of watchband, decorative component for mobile terminal such as mobile phone and note-type personal computer, decorative component for daily life articles such as soap case, coffee cup set, knife, fork, handles of tooth brush and shaver, earpick, scissors, seal or name card, decorative component for vehicle parts such as emblem representing manufacturer's name or model name, corner pole, etc., decorative component for sports goods for decorating golf club or spike shoes, decorative component for musical instrument for decorating guitar or the like, decorative component for accessory such as decoration of earphone unit, artificial dental crown, eyeglasses, brooch, necklace, earring, ring, bracelet, anklet, necktie pin, tie tack, medal, button, etc., decorative component for architectural members such as tiles for decorating floor, wall or ceiling, grip for door handle, etc. The ceramics for decorative component can also be preferably used as decorative component for wrist watch type mobile phone that combines the functions of the watch and the mobile phone.

The present invention will be described in detail below by way of Examples.

### Example 1 (not claimed)

First, a titanium nitride powder (purity 99%, mean particle size 22.3 *µ*m), a nickel powder (purity 99.5%, mean particle size 12.8 *µ*m), a niobium powder (purity 99.5 0, mean particle size 33 *µ*m), a chromium powder (purity 99%, mean particle size 55 *µ*m) and a carbon powder (purity not less than 99%, mean particle size 0.5 *µ*m) were weighed so as to set a ratio (content) in the sintered body to that shown in Table 1, ground and then mixed to obtain a prepared raw material.

Then, an isopropanol solution was added to each of the obtained prepared raw materials, followed by grinding and mixing for 72 hours using a vibration mill. 3 parts by mass of paraffin wax as a binder was added to the prepared raw materials and the mixture was dried and turned into granules by a spray drying method. The granules thus obtained were subjected to pressure molding under a pressure of 98 MPa to make a green compact. The green compact was degreased in a nitrogen atmosphere at 600°C and then sintered at 1,530°C for 2 hours to obtain a disk-shaped sintered body measuring 16 mm in diameter.

The sintered body was lapped on the surface thereof for one hour by supplying diamond abrasives each having a mean particle size of 1 µm onto a lapping stage made of tin. Subsequently, the sintered body was put into a rotary barrel polishing machine together with water and media made of green carborundum (GC) so as to carry out barrel polishing operation for 24 hours. Thus, samples Nos. 1 to 23 of the ceramics for decorative component composed of titanium nitride-based sintered body were obtained.

Then, contents of nickel, niobium and chromium that constitute each sample were measured by using a fluorescence X-ray analysis (XRF) instrument, while the carbon content was measured by using a carbon analyzer. The arithmetic mean height Ra of the decorative surface was measured at five points in accordance with JIS B 0601-2001 using a touch probe type surface roughness meter with the measurement length being set to 5 mm, the cut-off point being set to 0.8 mm, the probe tip radius being set to 2 µm and scanning speed of the probe being set to 0.5 mm/sec, and the mean value was calculated. Furthermore, fracture toughness K_{1c} was measured in accordance with indentation-fracture method (IF method) specified in JIS R 1607-1995, and the hardness was measured in accordance with JIS R 1610-2003. Specifically, Vickers hardness Hv (hereinafter referred to as hardness) was measured at five points of the decorative surface, and the measurements were averaged.

Regarding lightness index and chromaticness indices of each sample, color tone of the decorative surface was measured in accordance with JIS Z 8722-2000, using a spectrocolorimeter (CM-3700d manufactured by Konica Minolta Holdings Inc., etc.) in combination with CIE standard light source of D65 with view angle being set to 10° and the measurement area being set to 3 mm by 5 mm.

The color tone was evaluated by 40 monitors consisting of 5 male and 5 female monitors, who are interested in pinkish golden color, in each age brackets from 20s to 50s, by responding to questionnaire asking how they felt about 3 aspects of quality; high-grade impression, aesthetic satisfaction and mind soothing effect. It was decided that the sample was "Excellent" when not less than 90% of the monitors responded positively for any of the high-grade impression, aesthetic satisfaction and mind soothing effect, "Good" when the proportion was not less than 70% and less than 90% for at least one of the three aspects of quality, and "Poor" when the proportion was less than 70% for at least one of the three aspects of quality.

The results are shown in Table 1.

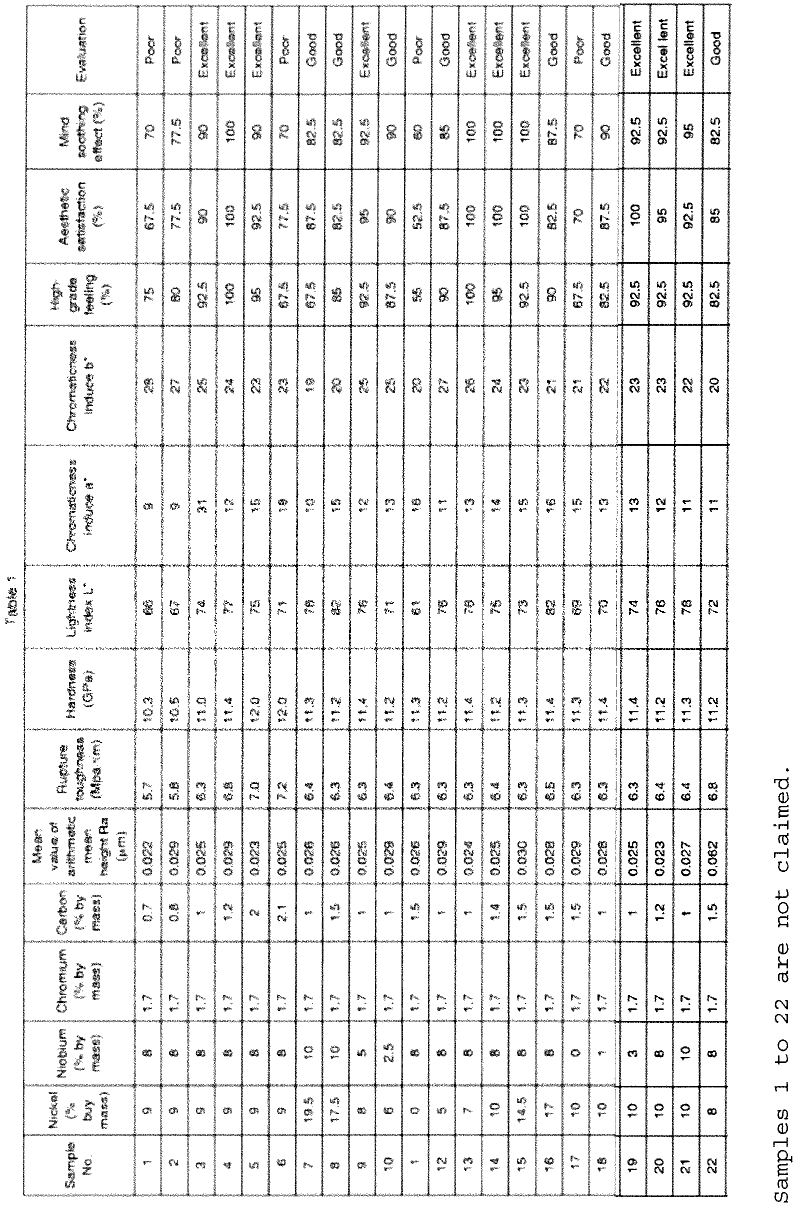

As is apparent from Table 1, sample Nos. 1 and 2 had carbon concentration less than 1% by mass that resulted in low rupture toughness and low hardness, and showed large color difference (ΔE*ab) from sample No. 4 used as the standard sample. Sample No. 6 that had carbon concentration of more than 2% by mass and therefore showed high rupture toughness and high hardness, but had high chromaticness indice a* and therefore did not produce the required decorative value and failed to satisfy the monitors.

Sample No. 11, in which nickel content which serves as a binder that bonds the crystal grains of titanium nitride was 0% by mass, had portion that remained without being sintered, and could not be used for decorative component. Sample No. 17, in which niobium content was to by mass, did not produce the decorative value required by monitors and failed to satisfy the monitors.

Samples Nos. 3 to 5, 7 to 10, 12 to 16 and 18 to 22 included the carbon content of not less than 1% by mass nor more than 2% by mass, and produced the decorative value required by monitors and were able to satisfy the monitors. In particular, samples Nos. 3 to 5, 9, 10, 13 to 15 and 19 to 21, that showed the arithmetic mean height Ra of the decorative surface of not more than 0.03 µm, the lightness index L* of not less than 72 nor more than 84, chromaticness indices a* and b* of not less than 10 nor more than 15 and not less than 21 nor more than 26, respectively, in the L*a*b* color space of CIE1976 of the decorative surface, and therefore had high reflectivity of the decorative surface to light. This resulted in enhanced luster, and not less than 90% of the monitors responded positively evaluated high-grade impression, aesthetic satisfaction and mind soothing effect, showing that most of the monitors were satisfied.

### Example 2

Tests were conducted to investigate the changes in characteristics caused by the difference in the composition of the titanium nitride powder.

First, the titanium nitride powder, having an atomicity x shown in Table 2 in case that the composition formula of a powder of titanium nitride is TiNₓ, was prepared, and as regards other raw materials, the same compositions as those used in Example 1 were prepared. Next, the raw materials were weighed so as to set a ratio (content) in the sintered body to that shown in Table 2, ground and mixed to obtain a prepared raw material. Samples Nos. 24 to 28 of the ceramics for decorative component composed of titanium nitride-based sintered body were obtained by the method similar to that of Example 1.

Then, similar to Example 1, contents of nickel, niobium, chromium and carbon, the arithmetic mean height Ra and color tones were measured, and evaluation was made by monitors, who are interested in pinkish golden color, on 3 aspects of quality; high-grade impression, aesthetic satisfaction and mind soothing effect, by responding to questionnaire. Furthermore, the value of atomicity x in the composition formula TiNₓ was determined as follows. Specifically, after measuring the contents of oxygen and nitrogen using an oxygen-nitrogen analyzer, titanium content was determined by subtracting the contents of oxygen, nitrogen and carbon from 100% by mass. Titanium content and nitrogen content divided by the respective atomic weights gave the number of moles of the respective elements contained. The ratio of the number of moles of nitrogen in case that the number of moles of titanium is set to be one mole was defined as the value of atomicity x.

The results are shown in Table 2.

**Table 2**

| Sample No. | Value atomicity x of raw material powder | Value atomicity x of sintered body | Nickel (% by mass) | Niobium (% by mass) | Chromium (% by mass) | Carbon (% by mass) | Mean value of arithmetic mean height Ra (µm) | Lightness index L* | Chromaticness indices a* | Chromaticness indice b* | High-grade feeling (%) | Aesthetic satisfaction (%) | Mind soothing effect (%) |
|---|---|---|---|---|---|---|---|---|---|---|---|---|---|
| 24 | 0.58 | 0.7 | 10 | 7 | 2 | 1.4 | 0.026 | 85 | 10 | 21 | 85 | 80 | 85 |
| 25 | 0.70 | 0.8 | 10 | 7 | 2 | 1.4 | 0.024 | 84 | 10 | 21 | 92.5 | 100 | 90 |
| 26 | 0.83 | 0.9 | 10 | 7 | 2 | 1.4 | 0.026 | 80 | 11 | 24 | 97.5 | 95 | 90 |
| 27 | 0.90 | 0.96 | 10 | 7 | 2 | 1.4 | 0.024 | 78 | 13 | 25 | 100 | 100 | 100 |
| 28 | 0.95 | 1 | 10 | 7 | 2 | 1.4 | 0.022 | 71 | 15 | 26 | 82.5 | 82.5 | 85 |

Samples 24 and 28 are not claimed.

As is apparent from Table 2, compared to sample No. 24 (not claimed) that showed the value of atomicity x of less than 0.8 and sample No. 28 (not claimed) that showed the value of atomicity x of more than 0.96, samples Nos. 25 to 27 according to the present invention, that showed the value of atomicity x of not less than 0.8 nor more than 0.96 had enhanced color tone with luster, thus satisfying the monitors with high-grade impression, aesthetic satisfaction and mind soothing effect.

### Example 3

A test was conducted to investigate the changes in characteristics caused by the difference in the contents of nickel and niobium.
First, the titanium nitride powder used in sample No. 27 was prepared, together with other raw materials of the same composition as those used in Example 1. The raw materials were weighed so as to set a ratio (content) in the sintered body to that shown in Table 3, ground and mixed to obtain a prepared raw material. Samples Nos. 29 to 40 of the ceramics for decorative component composed of titanium nitride-based sintered bodies were obtained by the method similar to that of Example 1.

Then, similar to Example 1, contents of nickel, niobium, chromium and carbon, the arithmetic mean height Ra and color tones were measured, and evaluation was by monitors, who are interested in pinkish golden color, on 3 aspects of quality; high-grade impression, aesthetic satisfaction and mind soothing effect, by responding to questionnaire. Also, the value of atomicity x was determined by the same calculation method as in Example 2. The results are shown in Table 3.

**Table 3**

| Sample No. | Value atomicity x of TiNx | Nickel (% by mass) | Niobium (% by mass) | Chromium (% by mass) | Carbon (% by mass) | Mean value of arithmetic wean height Ra (µm) | Lightness index L* | Chromaticness indice a* | Chromaticness indice b* | High-grade feeling (%) | Aesthetic satisfaction (%) | Mind soothing effect (%) |
|---|---|---|---|---|---|---|---|---|---|---|---|---|
| 29 | 0.96 | 5 | 8 | 2 | 1.2 | 0.028 | 75 | 11 | 28 | 85 | 85 | 85 |
| 30 | 0.96 | 7 | 8 | 2 | 1.2 | 0.024 | 75 | 11 | 26 | 92.5 | 90 | 92.5 |
| 31 | 0.96 | 12 | 8 | 2 | 1.2 | 0.025 | 82 | 14 | 23 | 92.5 | 92.5 | 90 |
| 32 | 0.96 | 14.5 | 8 | 2 | 1.2 | 0.024 | 83 | 15 | 23 | 90 | 90 | 90 |
| 33 | 0.96 | 17 | 8 | 2 | 1.2 | 0.025 | 84 | 17 | 22 | 85 | 87.5 | 85 |
| 34 | 0.96 | 10 | 1 | 2 | 1.2 | 0.027 | 70 | 16 | 24 | 80 | 82.5 | 80 |
| 35 | 0.96 | 10 | 2.5 | 2 | 1.2 | 0.023 | 73 | 15 | 24 | 90 | 90 | 92.5 |
| 36 | 0.96 | 10 | 3 | 2 | 1.2 | 0.021 | 77 | 13 | 24 | 90 | 95 | 100 |
| 37 | 0.96 | 10 | 7 | 2 | 1.2 | 0.024 | 79 | 12 | 24 | 90 | 92.5 | 100 |
| 38 | 0.96 | 10 | 8 | 2 | 1,2 | 0.022 | 81 | 11 | 24 | 100 | 92.5 | 90 |
| 39 | 0.96 | 10 | 10 | 2 | 1.2 | 0.025 | 81 | 10 | 21 | 90 | 90 | 92.5 |
| 40 | 0.96 | 10 | 13 | 2 | 1.2 | 0.022 | 81 | 9 | 20 | 82.5 | 82.5 | 80 |

Samples 29, 33, 34 and 40 are not claimed.

As is apparent from Table 3, samples Nos. 30 to 32, and 35 to 39 contained nickel with concentrations of not more than 7% nor more than 14.5% by mass, and niobium with concentrations of not less than 2.5% nor more than 10% by mass, and showed the lightness index L* of not less than 72 nor more than 84, chromaticness indices a* and b* of not less than 10 nor more than 15, and not less than 21 nor more than 26, respectively. As a result, not less than 90% of the monitors responded positively evaluated high-grade impression, aesthetic satisfaction, and mind soothing effect, showing that most of the monitors were satisfied.

### Example 4 (not claimed)

A test was conducted to investigate the changes in characteristics caused by the difference in chromium content.

First, the same raw materials as those used in Example 1 were prepared and were weighed so as to set a ratio (content) in the sintered body to that shown in Table 4, ground and mixed to obtain a prepared raw material. Samples Nos. 41 to 46 of the ceramics for decorative component composed of titanium nitride-based sintered bodies were obtained by the method similar to that of Example 1.

Then, contents of nickel, niobium, chromium and carbon, the arithmetic mean height Ra and color tones were measured similarly to Example 1. Among the corrosion resistance test specified in JIS B 7001-1995, semi-immersion in artificial sweat test was conducted (leaving to stand at 23±2°C for 24 hours). After the test, color tone was measured on each of the samples, and the differences between the values of the lightness index L* and chromaticness indices a* and b* before and after the test were calculated.

The results are shown in Table 4.

**Table 4**

| Sample No. | Nickel (% by mass) | Niobium (% by mass) | Chromium (% by mass) | Carbon (% by mass) | Mean value of arithmetic mean height Ra (µm) | Lightness index L* | | | Chromaticness indice a* | | | Chromaticness indice b* | | |
|---|---|---|---|---|---|---|---|---|---|---|---|---|---|---|
| | | | | | | Before test | After test | Difference | Before test | After test | Difference | Before test | After test | Difference |
| 41 | 10 | 5 | 0.5 | 1.7 | 0.027 | 78.0 | 75.6 | 2.4 | 13.3 | 12.6 | 0.7 | 24.0 | 23.6 | 0.4 |
| 42 | 10 | 5 | 1.5 | 1.7 | 0.025 | 76.8 | 76.7 | 0.1 | 12.8 | 12.7 | 0.1 | 24.3 | 24.3 | 0.0 |
| 43 | 10 | 5 | 3.5 | 1.7 | 0.023 | 77.8 | 77.7 | 0.1 | 12.7 | 12.6 | 0.1 | 24.3 | 24.2 | 0.1 |
| 44 | 10 | 5 | 5 | 1.7 | 0.020 | 77.5 | 77.5 | 0.0 | 12,6 | 12.5 | 0.1 | 24.5 | 24.5 | 0.0 |
| 45 | 10 | 5 | 6.5 | 1.7 | 0.024 | 77.3 | 77.2 | 0.1 | 12.4 | 12.3 | 0.1 | 21.7 | 21.6 | 0.1 |
| 46 | 10 | 5 | 8 | 1.7 | 0.021 | 76.8 | 76.8 | 0.0 | 11.4 | 11.4 | 0.0 | 22.0 | 22.0 | 0.0 |

Samples 41 to 46 are not claimed.

As is apparent from Table 4, compared to sample No. 41 that contained chromium with concentration of less than 1.5% by mass, samples Nos. 42 to 45 contained chromium with concentrations of not less than 1.5% by mass and therefore showed high corrosion resistance that was improved by the dense oxide film formed on the decorative surface through reaction with oxygen contained in the air. As a result, there were little differences between the values of the lightness index L* and chromaticness indices a* and b* before and after the test, thus demonstrating good corrosion resistance.

When the chromium content exceeds 6.5% by mass, although high corrosion resistance is obtained as is apparent from the case of sample No. 46, chromaticness indices a* and b* that indicate the clearness both decrease. In order to achieve corrosion resistance and clearness at the same time, therefore, it is preferable to contain not less than 1.5% nor more than 6.5% by mass of chromium as shown in samples Nos. 42 to 45.

### Example 5 (not claimed)

A test was conducted to investigate the changes in characteristics caused by the difference in open void ratio. First, the same raw materials as those used in Example 1 were prepared and were weighed so as to set a ratio (content) in the sintered body to that shown in Table 5, ground and mixed to obtain a prepared raw material. Sample Nos. 47 to 50 of the ceramics for decorative component composed of titanium nitride-based sintered body were obtained by the method similar to that of Example 1 up to a stage of barrel polishing, while varying the duration of barrel polishing operation in order to check the influence of the open void ratio.

Then, the open void ratio in the decorative surface was determined by capturing an image of the decorative surface with a CCD camera under a metallurgical microscope with a magnification of 200 times, and measuring the area of open voids in one field of view, with the measuring area of one field of view in the image being set to 2.25 × 10⁻² mm² and the number of fields of view being set to 20, that is, the total measuring area being set to 4.5 × 10⁻¹ mm², and calculating the ratio of the area of open voids to the total measuring area, using an image analyzer (LUZEX-FS manufactured by Nireco). Then, contents of nickel, niobium, chromium and carbon, the arithmetic mean height Ra and color tones were measured, and evaluation was made by monitors, who are interested in pinkish golden color, on 3 aspects of quality; high-grade impression, aesthetic satisfaction and mind soothing effect, by responding to questionnaire, similarly to Example 1.

The results are shown in Table 5.

**Table 5**

| Sample No. | Open void ratio (%) | Nickel (% by mass) | Niobium (% by mass) | Chromium (% by mass) | Carbon (% by mass) | Mean value of arithmetic mean height Ra (µm) | Lightness index L* | Chromaticness indice a* | Chromaticness indice b* | High-grade feeling /n, (%) | Aesthetic satisfaction (%) | Mind soothing effect (%) |
|---|---|---|---|---|---|---|---|---|---|---|---|---|
| 47 | 1.1 | 9 | 8 | 2 | 1.4 | 0.024 | 75 | 13 | 25 | 100 | 100 | 100 |
| 48 | 1.8 | 9 | 8 | 2 | 1.4 | 0.025 | 74 | 13 | 24 | 100 | 95 | 90 |
| 49 | 2.5 | 9 | 8 | 2 | 1.4 | 0.026 | 72 | 12 | 23 | 100 | 97.5 | 90 |
| 50 | 2.9 | 9 | 8 | 2 | 1.4 | 0.027 | 70 | 12 | 24 | 80 | 80 | 80 |

Samples 47 to 50 are not claimed.

As is apparent from Table 5, compared to sample No. 50 that showed an open void ratio of more than 2.5%, samples Nos. 47 to 49 that had an open void ratio of not more than 2.5% showed the lightness index L* of not less than 72, and produced a color tone more favorably accepted. As a result, not less than 90% monitors responded positively for any of high-grade impression, aesthetic satisfaction and mind soothing effect, showing that most of the monitors were satisfied.

Also, the ceramics for decorative component described constituted from titanium nitride-based sintered body made by the similar method using the raw materials similar to Example 1 contained lithium, sodium, potassium, iron, calcium, magnesium, strontium, barium, manganese and boron with the content of not more than 0.3% by mass in total based on 100% by mass of the ceramics for decorative component has thermal conductivity of not less than 22 W/(m·K) nor more than 26 M/(m·K). Therefore, the ceramics for decorative component described was used in part of a mobile terminal having electronic parts packaged therein. As a result, excellent heat dissipation can be achieved. This enables it to quickly dissipate the heat generated by electronic parts such as insulated gate-bipolar-transistor (IGBT) to the outside, so as to reduce the possibility of malfunction. Also, the ceramics for decorative component described was used in an emblem to be mounted to a vehicle. As a result, excellent thermal impact resistance can be achieved. Thus, an emblem to be mounted on the vehicle formed from the ceramics for decorative component of the present invention hardly undergoes dew condensation even in the cold atmosphere of a morning in winter, and aesthetic satisfaction is not impaired.

Furthermore, a composite decorative component, in which the ceramics for decorative component described and a decorative component having the decorative surface with different color tone are disposed in line, was made. Also because the ceramics for decorative component of the present invention has favorable property for color coordination and enhanced decorativeness, it is capable of satisfying the diversity of user's preference.

The decorative component for watch, decorative component for mobile terminal, decorative component for daily life articles, decorative components for vehicle parts, decorative component for sports goods, decorative component for musical instrument, decorative component for accessory and decorative component for architectural member that are formed from the ceramics for decorative component, as described above, show pinkish golden color that is highly evaluated as especially beautiful color tone, which produces high-grade impression and aesthetic satisfaction, and therefore provides mind soothing effect through visual sense, favorably.

### Description of Reference Numerals

- 1:: Ceramics for decorative component
- 2:: Decorative component
- 3:: Composite decorative component
- 10A, 10B:: Watch case
- 20:: Inner links
- 30:: Outer links
- 40:: Pin
- 50:: Watch band
- 60:: Mobile terminal
- 80:: Note-type personal computer
- 90:: Soap case
- 100:: Coffee cup set
- 111:: Emblem
- 112:: Corner pole
- 120:: Golf club
- 130:: Shoes
- 140:: Guitar
- 151:: Artificial crown
- 160:: Earphone unit
- 170:: Eyeglasses
- 180:: Door handle

## Claims

1. Ceramics for decorative component, composed of titanium nitride-based sintered body,
wherein the titanium nitride-based sintered body contains nickel, niobium, chromium and carbon,
wherein a content of carbon is not less than 1% by mass nor more than 2% by mass,
wherein an arithmetic mean height Ra measured in accordance with JIS B 0601-2001 of a decorative surface is not more than 0.03 µm,
wherein a lightness index L* measured in accordance with JIS Z 8722-2000 is not less than 72 nor more than 84 in a L*a*b* color space of CIE1976 of the decorative surface,
wherein a chromaticness indice a* measured in accordance with JIS Z 8722-2000 is not less than 10 nor more than 15 and a chromaticness indice b* measured in accordance with JIS Z 8722-2000 is not less than 21 nor more than 26 in the L*a*b* color space of CIE1976 of the decorative surface,
wherein the titanium nitride-based sintered body has composition represented by TiNₓ, x being in a range of 0.8 ≤ x ≤ 0.96,
wherein the ceramics contains nickel with a concentration of not less than 7% by mass nor more than 14.5% by mass, and niobium with a concentration of not less than 2.5% by mass nor more than 10% by mass,
wherein the ceramics contains chromium with a concentration of not less than 1.5% by mass nor more than 6.5% by mass, and
wherein titanium nitride as main component occupies not less than 50% by mass based on 100% by mass of the all components that constitute the titanium nitride-based sintered body.

2. A complex decorative component, comprising:
the ceramics for decorative component according to Claim 1; and
a decorative component having a decorative surface with color tone different from that of the ceramics for decorative component and being arranged along the ceramics for decorative component.

3. A decorative component for watch, being formed from the ceramics for decorative component according to Claim 1 or 2.

4. A decorative component for a mobile terminal, being formed from the ceramics for decorative component according to Claim 1 or 2.

5. A decorative component for daily life articles, being formed from the ceramics for decorative component according to Claim 1 or 2.

6. A decorative component for vehicle articles, being formed from the ceramics for decorative component according to Claim 1 or 2.

7. A decorative component for sports goods, being formed from the ceramics for decorative component according to Claim 1 or 2.

8. A decorative component for musical instrument, being formed from the ceramics for decorative component according to Claim 1 or 2.

9. A decorative component for accessory, being formed from the ceramics for decorative component according to Claim 1 or 2.

10. A decorative component for architectural members, being formed from the ceramics for decorative component according to Claim 1 or 2.

## Patentansprüche

1. Keramik für eine dekorative Komponente, die aus einem Titannitrid-basierten Sinterkörper zusammengesetzt ist,
wobei der Titannitrid-basierte Sinterkörper Nickel, Niob, Chrom und Kohlenstoff enthält,
wobei ein Gehalt an Kohlenstoff nicht weniger als 1 Masse-% und nicht mehr als 2 Masse-% ist,
wobei eine gemäß JIS B 0601-2001 gemessene arithmetische mittlere Höhe Ra einer dekorativen Oberfläche nicht mehr als 0,03 µm ist,
wobei ein gemäß JIS Z 8722-2000 gemessener Helligkeitsindex L* in einem CIE1976 L*a*b* Farbraum der dekorativen Fläche nicht weniger als 72 und nicht mehr als 84 beträgt,
wobei ein gemäß JIS Z 8722-2000 gemessener Chromatizitätsindex a* nicht weniger als 10 und nicht mehr als 15 und ein gemäß JIS Z 8722-2000 gemessener Chromatizitätsindex b* nicht weniger als 21 und nicht mehr als 26 im CIE1976 L*a*b*-Farbraum der dekorativen Fläche beträgt,
wobei der Titannitrid-basierte Sinterkörper eine durch TiNₓ dargestellte Zusammensetzung hat, wobei x in einem Bereich von 0,8 ≤ x ≤ 0,96 liegt,
wobei die Keramik Nickel mit einer Konzentration von nicht weniger als 7 Masse-% und nicht mehr als 14,5 Masse-% und Niob mit einer Konzentration von nicht weniger als 2,5 Masse-% und nicht mehr als 10 Masse-% enthält,
wobei die Keramik Chrom mit einer Konzentration von nicht weniger als 1,5 Masse-% und nicht mehr als 6,5 Masse-% enthält, und
wobei Titannitrid als Hauptbestandteil nicht weniger als 50 Masse-% beträgt, basierend auf 100 Masse-% aller Bestandteile, die den Titannitrid-basierten Sinterkörper bilden.

2. Eine komplexe dekorative Komponente, aufweisend:
die Keramik für eine dekorative Komponente gemäß Anspruch 1 und
eine dekorative Komponente, die eine dekorative Fläche mit einem Farbton hat, der sich von demjenigen der Keramik für eine dekorative Komponente unterscheidet und entlang der Keramik für eine dekorative Komponente angeordnet ist.

3. Eine dekorative Komponente für eine Uhr, die aus der Keramik für eine dekorative Komponente gemäß Anspruch 1 oder 2 gebildet ist.

4. Eine dekorative Komponente für ein mobiles Endgerät, die aus der Keramik für eine dekorative Komponente gemäß Anspruch 1 oder 2 gebildet ist.

5. Eine dekorative Komponente für Artikel des täglichen Bedarfs, die aus der Keramik für eine dekorative Komponente gemäß Anspruch 1 oder 2 gebildet ist.

6. Eine dekorative Komponente für Fahrzeugartikel, die aus der Keramik für eine dekorative Komponente gemäß Anspruch 1 oder 2 gebildet ist.

7. Eine dekorative Komponente für Sportartikel, die aus der Keramik für eine dekorative Komponente gemäß Anspruch 1 oder 2 gebildet ist.

8. Eine dekorative Komponente für ein Musikinstrument, die aus der Keramik für eine dekorative Komponente gemäß Anspruch 1 oder 2 gebildet ist.

9. Eine dekorative Komponente für ein Zubehörteil, die aus der Keramik für eine dekorative Komponente gemäß Anspruch 1 oder 2 gebildet ist.

10. Eine dekorative Komponente für architektonische Bauelemente, die aus der Keramik für eine dekorative Komponente gemäß Anspruch 1 oder 2 gebildet ist.

## Revendications

1. Une céramique pour une composante décorative, composée d'un corps fritté à base de nitrure de titane,
dans laquelle le corps fritté à base de nitrure de titane comprend du nickel, du niobium, du chrome et du carbone,
dans laquelle une teneur en carbone n'est ni inférieure à 1 % en masse ni supérieure à 2 % en masse,
dans laquelle une hauteur moyenne arithmétique Ra mesurée selon JIS B 0601-2001 d'une surface décorative n'est pas supérieure à 0,03 µm,
dans laquelle un indice de clarté L* mesuré selon JIS Z 8722-2000 n'est ni inférieur à 72 ni supérieur à 84 dans un espace de couleur CIE1976 L*a*b* de la surface de la surface décorative,
dans laquelle un indice de chromaticité a* mesuré selon JIS Z 8722-2000 n'est ni inférieur à 10 ni supérieur à 15 et un indice de chromaticité b* mesuré selon JIS Z 8722-2000 n'est ni inférieur à 21 ni supérieur à 26 dans l'espace de couleur CIE1976 L*a*b* de la surface décorative,
dans laquelle le corps fritté à base de nitrure de titane a une composition représentée par TiNₓ, x étant dans une plage de 0,8 ≤ x ≤ 0,96,
dans laquelle la céramique contient du nickel avec une concentration qui n'est pas inférieure à 7 % en masse ni supérieure à 14,5 % en masse, et du niobium avec une concentration qui n'est pas inférieure à 2,5 % en masse ni supérieure à 10 % en masse,
dans laquelle la céramique contient du chrome avec une concentration qui n'est ni inférieure à 1,5 % en masse ni supérieure à 6,5 % en masse, et
dans laquelle le nitrure de titane en tant que composant principal n'occupe pas moins que 50 % en masse à base de 100 % en masse de tous les composants qui constituent le corps fritté à base de nitrure de titane.

2. Une composante décorative complexe, comprenant :
la céramique pour une composante décorative selon la revendication 1, et
une composante décorative présentant une surface décorative avec un ton de couleur différent de celui de la céramique pour une composante décorative et étant agencée le long de la céramique pour la composante décorative.

3. Une composante décorative pour une montre, étant formée à partir de la céramique pour une composante décorative selon la revendication 1 ou 2.

4. Une composante décorative pour un terminal mobile, étant formée à partir de la céramique pour une composante décorative selon la revendication 1 ou 2.

5. Une composante décorative pour des biens de consommation courante, étant formée à partir de la céramique pour une composante décorative selon la revendication 1 ou 2.

6. Une composante décorative pour des articles pour véhicule, étant formée à partir de la céramique pour une composante décorative selon la revendication 1 ou 2.

7. Une composante décorative pour des articles de sport, étant formée à partir de la céramique pour une composante décorative selon la revendication 1 ou 2.

8. Une composante décorative pour un instrument de musique, étant formée à partir de la céramique pour une composante décorative selon la revendication 1 ou 2.

9. Une composante décorative pour un accessoire, étant formée à partir de la céramique pour une composante décorative selon la revendication 1 ou 2.

10. Une composante décorative pour des éléments architecturaux, étant formée à partir de la céramique pour une composante décorative selon la revendication 1 ou 2.
